Europäisches Patentamt

European Patent Office

Office européen des brevets

(11) Veröffentlichungsnummer: **0 117 513**
A1

(12) # EUROPÄISCHE PATENTANMELDUNG

(21) Anmeldenummer: **84101809.6**

(22) Anmeldetag: **21.02.84**

(51) Int. Cl.³: **H 04 Q 3/54,** H 04 Q 11/04, H 04 M 3/24

(30) Priorität: **24.02.83 DE 3306523**

(43) Veröffentlichungstag der Anmeldung: **05.09.84** Patentblatt 84/36

(84) Benannte Vertragsstaaten: **AT CH DE FR GB LI NL SE**

(71) Anmelder: **SIEMENS AKTIENGESELLSCHAFT, Berlin und München Wittelsbacherplatz 2, D-8000 München 2 (DE)**

(72) Erfinder: **Wilhelm, Helmut, Oberndorfer Strasse 4, D-8016 Feldkirchen (DE)**

(54) Verfahren zum Betrieb eines speichergesteuerten elektronischen Vermittlungssystemes mit zentralem Steuerrechner.

(57) Verfahren zum Betrieb eines speichergesteuerten elektronischen Vermittlungssystems mit zentralem Steuerrechner (ZR), dessen Speicher erste Angaben (1A) über das Vorhandensein von Systemorganen (P) und/oder von Systemorgananschlüssen (A) und/oder über feste Zuordnungen von Systemorgananschlüssen (A in 1HW ... xHW) zu bestimmten Systemorganen z.B. Teilnehmern (P), und getrennt davon zweite Angaben (2A) über Zustände solcher Systemorgane und/oder Systemorgananschlüsse (P, A) speichert. Zumindest gelegentlich in Zeiten, in denen der Steuerrechner (ZR) nicht anderweitig für Verarbeitungen belegt ist, vergleicht dieser Steuerrechner (ZR) einzeln nacheinander zumindest einen Teil seiner gespeicherten zweiten Angaben (2A) mit seinen gespeicherten betreffenden ersten Angaben (1A, mittels V). Bei einem Widerspruch zwischen diesen verglichenen Angaben (1A:2A) ändert der Steuerrechner (ZR) die jeweilige zweite Angabe (2A) so ab, daß danach diese zweite Angabe (2A) bei einem gemäß der ersten Angabe (1A) gegebenen Vorhandensein des betreffenden Systemorganes bzw. Systemorgananschlusses (P, A), dem unbelegten Ruhezustand des betreffenden Systemorganes bzw. Systemorgananschlusses (P, A) und bei einem gemäß der ersten Angabe (1A) gegebenen Nichtvorhandensein des betreffenden Systemorganes bzw. Systemorgananschlusses (P, A), diesem Nichtvorhandensein entspricht.

SIEMENS AKTIENGESELLSCHAFT
Berlin und München

Unser Zeichen:
VPA 83 P 1 0 9 8 E

0117513

Verfahren zum Betrieb eines speichergesteuerten elektronischen Vermittlungssystemes mit zentralem Steuerrechner.

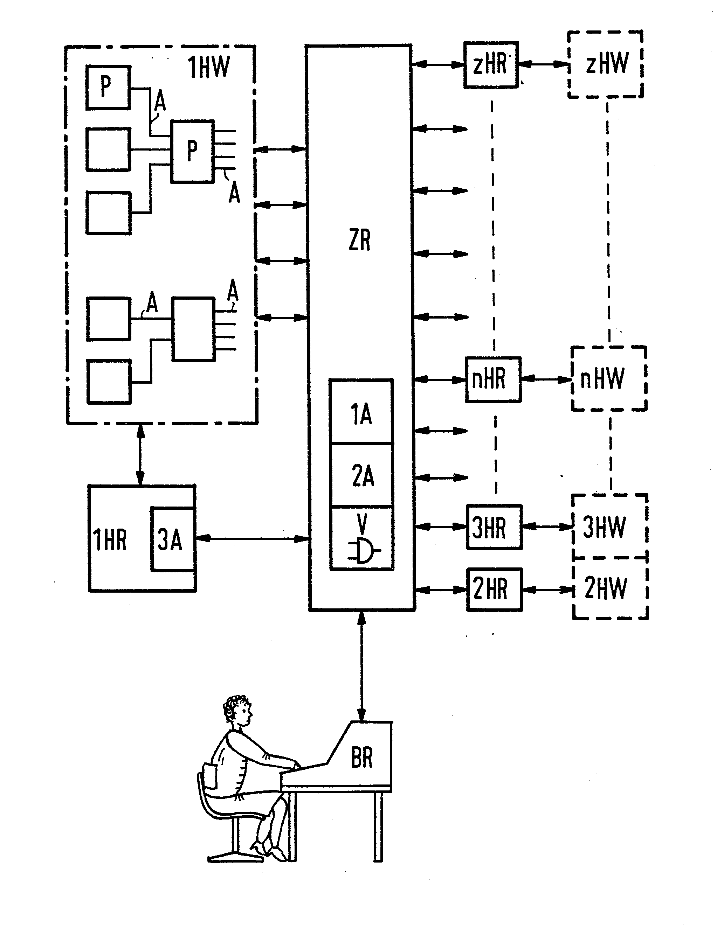

Die Erfindung geht von dem im Oberbegriff des Patentanspruches 1 genannten Verfahren zum Betrieb eines Vermittlungssystemes aus, wie es z.B. durch telcom report 4 (1981) Beiheft "Digitalvermittlungssystem EWSD", vor allem Seite 4 bis 18, insbesondere Bild 1 auf Seite 8, vorbekannt ist. Im Speicher des Steuerrechners sind permanent oder semipermanent erste Angaben gespeichert, z.B. über die Zuordnung von Teilnehmeranschlußnummern zu Koppelfeldausgängen und, besonders bei Teilausbau des Vermittlungssystems, über das Vorhandensein oder Nichtvorhandensein von Systemorganen bzw. Modulen bzw. über das materiell Angeschlossensein oder Noch-Nicht-Angeschlossensein von anschaltbaren Einheiten an die betreffenden Systemorgananschlüsse; - also Angaben, die jedenfalls teilweise z.B. Hilfe eines Bedienrechners (Operation and Maintenance-Gerät) in den Speicher des Steuerrechners eingegeben werden können. Die gespeicherten zweiten Angaben betreffen hingegen transiente Umstände, z.B. Angaben über Zustände wie Belegungszustände oder Steuerungszustände jener verschiedenen Systemorgananschlüsse der verschiedenen Systemorgane bzw. Module bzw. Einheiten;-also Angaben, die z.B. bei der Wegesuche und Hörtöne-Steuerung, bei der Gebührenerfassung und Durchschaltung sowie Unterbrechung von Verbindungswegen bzw. bei Zeitkanalzuordnungen benötigt werden und höchstens für gelegentliche Überwachungen an Bildschirmen bzw. Druckern zur Kontrolle angezeigt werden.

Be 1 Ky/17.02.1983

Es zeigte sich, daß beim Betrieb eines solchen Vermittlungssystemes, aufgrund von normalerweise nur geringfügigen Betriebsstörungen, mit der Zeit die zweiten Angaben immer mehr von den wirklichen Belegungs- bzw. Steuerungszuständen bei mit der Zeit vielen Systemorgananschlüssen abweichen. Das kommt im allgemeinen davon, daß mit der Zeit zunehmend im Speicher des Steuerrechners fehlerhaft das Belegtsein solcher Systemorgananschlüsse, z.B. fehlerhaft das Belegtsein von Leitungen bzw. Zeitkanälen, gespeichert wird, obwohl in Wahrheit die letzte Belegung evtl. schon seit Monaten beendet und seither dieser Systemorgananschluß stets frei ist. Insbesondere bei der Wegesuche und bei der Suche nach freien, erst bei Bedarf zuzuschaltenden Systemorganeingängen bzw.-ausgängen, wie bei der Suche nach freien Umsetzern, Verzonern, Zeitkanälen oder Fernsprechauskunftsplätzen, wird also ein intensiverer Vermittlungsbetrieb bzw. eine stärkere Belegung vorgetäuscht als in Wahrheit vorhanden ist. Dieses ist besonders störend in Zeiten mit Spitzenbelastung des Vermittlungssystems, weil viele solche Systemorgananschlüsse bzw. Leitungen, welche an sich in Wahrheit zur Verfügung stünden, wegen fehlerhafter zweiter Angaben im Speicher des Steuerrechners also doch nicht vom Steuerrechner zur Verfügung gestellt werden.

Die Aufgabe der Erfindung ist, selbsttätig von Zeit zu Zeit solche fehlerhaften zweiten Angaben zu ermitteln und zu korrigieren, so daß das Vermittlungssystem selbsttätig seine dem Ausbau bzw. Teilausbau entsprechende Vermittlungsleistung wieder vollständig zu Verfügung stellt, vor allem indem scheinbare, nur vorgetäuschte Belegungen systematisch und selbsttätig ermittelt und so revidiert werden, daß diese Systemorgananschlüsse danach wieder voll zur Verfügung stehen.

0117513

Diese Aufgabe wird durch die im Patentanspruch 1 genannten Merkmale gelöst.

Die im Anspruch 2 genannte Weiterbildung der Erfindung betrifft ein Verfahren, bei welchem neben dem zentralen Steuerrechner zusätzlich eine Vielzahl peripherer dezentraler Hilfssteuerrechner vorhanden ist, z.B. 511 solche Hilfssteuerrechner für ein Amt mit insgesamt 100 000 Teilnehmeranschlüssen vorhanden sind. Jedem solchen Hilfssteuerrechner ist jeweils individuell ein Teil der Systemorgane bzw. ein Teil der Anschlüsse dieser Systemorgane zugeordnet. Für diesen Hilfssteuerrechner ist jeweils ebenfalls ein bevorzugt eigener Speicher angebracht, welcher abbildhaft dritte Angaben über Zustände wie Betriebszustände bzw. Steuerungszustände der dem betreffenden Hilfssteuerrechner zugeordneten Systemorgananschlüsse speichert. Im allgemeinen sind also im Speicher des Hilfssteuerrechners keine oder nur sehr wenige Angaben gespeichert, welche andere Hilfssteuerrechner und welche die diesen anderen Hilfssteuerrechnern zugeordnete Systemorgananschlüsse betreffen. Im Speicher des Hilfssteuerrechners sind nämlich jeweils im allgemeinen höchstens noch Angaben über einige zusätzliche Details des zentralen Steuerrechners gespeichert, wie z.B. ob Quittungen vom zentralen Steuerrechner erhalten wurden und/oder welche Zeitkanäle für welche Verbindungen bisher dem betreffenden Hilfssteuerrechner durch den zentralen Steuerrechner zugeteilt sind, etc. . Die im Patentanspruch 2 angegebenen Maßnahmen gestatten, auch die im Speicher des Hilfssteuerrechners gespeicherten dritten Angaben über Zustände, wie Belegungs- bzw. Steuerungszustände der diesem Hilfssteuerrechner zugeordneten Systemorgananschlüsse, von Zeit zu Zeit daraufhin zu überprüfen, ob nicht fehlerhafterweise, ähnlich wie bei den zweiten Angaben, mit der Zeit spezielle Zustände wie Belegtheiten vorgetäuscht wurden, obwohl inzwischen schon längst in Wahrheit der jeweilige Systemorgananschluß z.B. nicht mehr belegt ist.

Die Erfindung wird anhand der Figur näher erläutert. Das dort gezeigte speichergesteuerte Beispiel der Erfindung weist den zentralen Steuerrechner ZR auf. In einem Speicher dieses Steuerrechners ZR sind erste Angaben 1A über das Vorhandensein von Systemorganen P bzw. Systemorgananschlüssen A, und/oder erste Angaben 1A über feste Zuordnungen von Systemorgananschlüssen A zu bestimmten Systemorganen P gespeichert. Außerdem sind, bevorzugt in einem eigenen Speicherabschnitt, zweite Angaben 2A über Zustände solcher Systemorgane P und/oder Systemorgananschlüsse A gespeichert. Die ersten Angaben 1A werden bevorzugt über den Bedienrechner BR vor Beginn des Betriebs des Vermittlungssystems oder im Zuge der Anpassung an Änderungen der Teilnehmer und/oder der Systemorgane eingegeben. Die zweiten Angaben 2A werden hingegen laufend vom Steuerrechner ZR modifiziert entsprechend den Betriebszuständen der diversen Systemanschlüsse A des Vermittlungssystems. Die ersten Angaben werden also normalerweise permanent oder semipermanent gespeichert, z.B. über die Zuordnung von Teilnehmeranschlüssen zu Koppelfeldausgängen, über das Vorhandensein oder Nichtvorhandensein von Systemorganen bzw. Modulen P, über das materiell Angeschlossensein oder Noch-Nichtangeschlossensein von anschaltbaren Einheiten P an jene Systemorgananschlüsse A. Die zweiten Angaben 2A betreffen hingegen transiente Umstände, z.B. Zustände wie Belegungszustände oder Steuerungszustände jener verschiedenen Systemorgane P und/oder Systemorgananschlüsse A der verschiedenen Systemorgane P. Die zweiten Angaben 2A dienen also dem Steuerrechner ZR insbesondere zur Wegesuche und Hörtöne-Steuerung, zur Ge-

0117513

VPA 83 P 1 0 9 8 E

bührenerfassung, Durchschaltung und Unterbrechung von
Verbindungswegen, zu Zeitkanalzuordnungen und so weiter,
wobei solche transiente Umstände laufend vom Steuerrechner ZR den sich jeweils ändernden Zuständen der
vielen Anschlüsse A und der vielen Systemorgane P jener
vielen Verbindungswege angepaßt werden, die gleichzeitig
aufgebaut, gehalten und/oder abgebaut werden.

Die zweiten Angaben 2A weichen mit der Zeit normalerweise immer stärker von den wahren Zuständen der ihnen
zugeordneten Systemorgane P bzw. Systemorgananschlüsse
A ab, wobei im allgemeinen mit der Zeit zunehmend fehlerhaft das Belegtsein oder spezielle Arten von Belegtzuständen von Leitungen bzw. Zeitkanälen A gespeichert werden, obwohl in Wahrheit diese betreffenden
Systemorgananschlüsse A - oder sogar ganze Systemorgane
P - seit langer Zeit unbelegt, also frei sind. Bei der
Wegesuche im Steuerrechner ZR werden also solche,fehlerhaft durch zweite Angaben 2A markierten,Systemorgane bzw.
Systemorgananschlüsse P,A übergangen, d.h. nicht mehr
für Verbindungen zur Verfügung gestellt, wodurch mit der
Zeit scheinbar eine besonders starke Belastung des Vermittlungssystems vorgetäuscht wird,selbst wenn nur eine
ganz kleine Belastung in Wahrheit vorliegt.

Durch die Erfindung werden selbsttätig von Zeit zu Zeit
solche fehlerhaften zweiten Angaben ermittelt und korrigiert, so daß ab dann solche bisher fehlerhaften markierten Systemorgane bzw. Systemorgananschlüsse P,A
wieder voll zur Verfügung stehen.

Diese Ermittlung der fehlerhaften Markierungen erfolgt
vor allen dadurch, daß zumindest gelegentlich in Zeiten,
in denen der Steuerrechner ZR nicht anderweitig für Verarbeitungen belegt ist, dieser Steuerrechner ZR einzeln
nacheinander zumindest einen Teil seiner gespeicherten zweiten Angaben 2A mit seinen gespeicherten betreffenden ersten Angaben 1A auf Plausibilität vergleicht, z.B. mit Hilfe von Gattern bzw. Vergleicherschaltungen V. Ergeben sich bei diesem Vergleich Widersprüche zwischen den ersten Angaben 1A und den zweiten Angaben 2A, z.B. dahingehend, daß in Wahrheit nicht vorhandene Systemorgananschlüsse A gem. der fehlerhaften zweiten Angabe 2A als frei oder als belegt markiert sind, oder daß an sich vorhandene Systemorgane und/oder Systemorgananschlüsse P,A gem. der fehlerhaften zweiten Angabe 2A spezielle Zustände aufweisen sollen, die für die betreffenden Systemorgane bzw. Systemorgananschlüsse P,A überhaupt nie vorkommen können, dann wird diese zweite Angabe 2A selbsttätig korrigiert: Bei einem gem. der ersten Angabe 1A gegebenen Vorhandensein des betreffenden Systemorganes bzw. Systemorgananschlusses P,A wird die zweite Angabe 2A so abgeändert, daß diese letztere 2A den unbelegten normalen Ruhezustand des betreffenden Systemorganes bzw. Systemorgananschlusses P,A entspricht. Wenn hingegen gem. der ersten Angabe 1A das betreffende Systemorgan bzw. der betreffende Systemorgananschluß P,A überhaupt nicht vorhanden ist, wird die fehlerhafte zweite Angabe 2A dahingehend abgeändert, daß sie diesem Nichtvorhandensein nunmehr entspricht, was normalerweise auf ein Verbot der Belegung dieses Systemorgans bzw. Systemorgananschlusses P,A solange entspricht, bis dieses Systemorgan P bzw. Systemorgananschluß A schließlich gem. der ersten Angabe 1A wirklich eines Tages existiert.

Durch diese Abänderung der Markierung der betreffenden Systemorgane P bzw. Systemorgananschlüsse A wird also vollautomatisch die Software 2A so korrigiert, daß der Betrieb des gesamten Vermittlungssystems in Zukunft nicht mehr störend durch solche Fehler in den zweiten Angaben 2A beeinträchtigt wird.

In der Figur ist gezeigt, daß der Steuerrechner ZR
an sich auch direkt auf die Systemorgane P bzw. Systemorgananschlüsse A einwirken kann. Dies ist insbesondere
bei kleineren Vermittlungssystemen, z.B. bis zu
1000 Teilnehmeranschlüssen, leicht möglich. Bei sehr
großen Vermittlungssystemen, z.B. für 10 000 oder gar
100 000 Teilnehmer, ist es hingegen im allgemeinen
ratsam, im Steuerrechner ZR nur einige zentrale
Aufgaben wie Wegesuche, Rufnummernzuordnungen und sonstige allgemeine Wartungen durchzuführen. Die sonstigen
Aufgaben, welche bereits peripher erledigt werden können, wie Ermitteln der gewählten Rufnummer bei Beginn
des Aufbaus eines Verbindungsweges, werden bevorzugt
in dezentralen peripheren Hilfssteuerrechnern durchgeführt. Diese Hilfssteuerrechner entlasten damit den
zentralen Steuerrechner ZR, der bei sehr großen Vermittlungssystemen sonst überlastet wäre. In der Figur
ist angedeutet, daß eine Vielzahl solcher Hilfssteuerrechner 1HR...nHR...zHR angebracht sind, welche jeweils
einen ihnen individuell zugeordneten Abschnitt des Vermittlungssystems 1HW...nHW...zHW überwachen und steuern.
Der zentrale Steuerrechner ZR kann dabei evtl. zusätzlich auch direkt Einfluß auf die peripheren Systemorgane
bzw. Systemorgananschlüsse P,A ausüben, statt alleine
indirekt über die Hilfssteuerrechner xHR auf die verschiedenen Abschnitte xHW Einflüsse auszuüben, wie in
der Figur angedeutet ist.

Solche Hilfssteuerrechner xHR enthalten häufig eigene
Speicher bzw. haben häufig Zugriff zu eigenen Abschnitten eines mehr oder weniger zentral angebrachten Speichers. In diesem dem Hilfssteuerrechner xHR jeweils
zugänglichen Speicher bzw. Speicherabschnitt sind dritte Angaben gespeichert, welche Abbilder der Zustände
der ihnen individuell zugeordneten peripheren Organe.

0117513

bzw. Organanschlüsse P,A in xHW entsprechen.

Es ist nun möglich, auch die im betreffenden Speicher bzw. Speicherabschnitt des Hilfssteuerrechners xHR gespeicherten dritten Angaben 3A daraufhin zu überprüfen, ob nicht fehlerhafterweise, ähnlich wie bei den zweiten Angaben 2A, mit der Zeit spezielle Zustände vorgetäuscht wurden, welche in Wahrheit gar nicht vorhanden sind. Bei dieser Weiterbildung der Erfindung ist vorgesehen, daß zumindest gelegentlich in Zeiten, in denen sowohl der Steuerrechner ZR als auch der jeweils betreffende Hilfssteuerrechner xHR nicht anderweitig für Verarbeitungen belegt sind, dieser Steuerrechner ZR bzw. der betreffende Hilfssteuerrechner xHR die dritten Angaben 3A überprüfen und korrigieren. Dazu werden einzeln nacheinander zumindest ein Teil der gespeicherten dritten Angaben 3A mit den gespeicherten betreffenden zugehörenden zweiten Angaben 2A verglichen. Bei einem Widerspruch zwischen diesen verglichenen Angaben 2A, 3A ändert der Steuerrechner ZR und/oder der Hilfssteuerrechner xHR die jeweiligen zweiten und die dritten Angaben 2A und 3A so ab, daß danach diese zweite und diese dritte Angabe 2A, 3A der Wahrheit entsprechen, insbesondere den ersten Angaben 1A entsprechen. Dazu werden die zweiten und dritten Angaben 2A, 3A so abgeändert, daß danach diese Angaben 2A, 3A bei einem gem. den Speicherinhalten des Steuerrechners ZR und/oder des Hilfssteuerrechners xHR gegebenen Vorhandensein des betreffenden peripheren Systemorgans bzw. Systemorgananschlusses P,A, dem unbelegten Ruhezustand des betreffenden peripheren Systemorganes bzw. Systemorgananschlusses P,A entsprechen. Sind hingegen gem. den Speicherinhalten des Steuerrechners ZR und/oder des Hilfssteuerrechners xHR die betreffenden Systemor-

0117513

gane P und/oder Systemorgananschlüsse A nicht vorhanden,
werden die zweite und die dritte Angabe 2A, 3A so abgeändert, daß sie diesem Nichtvorhandensein entsprechen.

2 Patentansprüche

1 Figur

0117513

Patentansprüche.

1. Verfahren zum Betrieb eines speichergesteuerten elektronischen Vermittlungssystems mit zentralem Steuerrechner (ZR), dessen Speicher erste Angaben (1A) über das Vorhandensein von Systemorganen (P) und/oder von Systemorgananschlüssen (A) und/oder über feste Zuordnungen von Systemorgananschlüssen (A' in 1HW...xHW) zu bestimmten Systemorganen z.B. Teilnehmern (P), und getrennt davon, bevorzugt in einem eigenen Speicherabschnitt, zweite Angaben (2A) über (Belegungs- bzw. Steuerungs)Zustände solcher Systemorgane und/oder Systemorgananschlüsse (P, A) speichert, insbesondere digital betriebenes Fernsprech-Vermittlungssystem, dessen erste Angaben (1A) bevorzugt über einen Bedienrechner (BR) eingegeben werden, d a d u r c h   g e k e n n z e i c h n e t , daß zumindest gelegentlich in Zeiten, in denen der Steuerrechner (ZR) nicht anderweitig für Verarbeitungen belegt ist, dieser Steuerrechner (ZR)

- einzeln nacheinander zumindest einen Teil seiner gespeicherten zweiten Angaben (2A) mit seinen gespeicherten betreffenden ersten Angaben (1A) vergleicht (mittels V) und

- jeweils bei einem Widerspruch zwischen diesen verglichenen Angaben (1A : 2A) die jeweilige zweite Angabe (2A) so abändert, daß danach diese zweite Angabe (2A)

-- bei einem gemäß der ersten Angabe (1A) gegebenen Vorhandensein des betreffenden Systemorganes bzw. Systemorgananschlusses (P, A), dem unbelegten Ruhezustand des betreffenden Systemorganes bzw. Systemorgananschlusses (P, A) entspricht, und

-- bei einem gemäß der ersten Angabe (1A) gegebenen Nichtvorhandensein des betreffenden Systemorganes bzw. Systemorgananschlusses (P, A), diesem Nichtvorhandensein entspricht.

2. Verfahren nach Anspruch 1 mit einer Vielzahl von zusätzlichen dezentralen Hilfssteuerrechnern(1HR...zHR) deren Speicher jeweils dritte Angaben (3A) als Abbilder der Zustände der ihnen individuell zugeordneten peripheren Systemorgane bzw. Systemorgananschlüsse (P, A in 1HW...zHW) speichern,

d a d u r c h  g e k e n n z e i c h n e t , daß zumindest gelegentlich in Zeiten, in denen sowohl der Steuerrechner (ZR) als auch der jeweils betreffende Hilfssteuerrechner (z.B. 1HR) nicht anderweitig für Verarbeitungen belegt sind, dieser Steuerrechner (ZR) und/oder der Hilfssteuerrechner (1HR)

- einzeln nacheinander zumindest einen Teil der gespeicherten dritten Angaben (3A) mit den gespeicherten betreffenden zweiten Angaben (2A) vergleichen und

- jeweils bei einem Widerspruch zwischen diesen verglichenen Angaben (2A : 3A) der Steuerrechner (ZR) und/oder der Hilfssteuerrechner (1HR) die jeweilige zweite und dritte Angabe (z.B. 3A) so abändern, daß danach diese zweite und diese dritte Angabe (2A, 3A)

-- bei einem gemäß den Speicherinhalten des Steuerrechners (ZR) und/oder Hilfssteuerrechners (1HR) gegebenen Vorhandensein des betreffenden peripheren Systemorganes bzw. Systemorgananschlusses (P, A), dem unbelegten Ruhezustand des betreffenden peripheren Systemorganes bzw. Systemorgananschlusses (P, A) entsprechen, und

-- bei einem gemäß den Speicherinhalten des Steuerrechners (ZR) und/oder des Hilfssteuerrechners (1HR) gegebenen Nichtvorhandensein des betreffenden peripheren Systemorganes bzw. Systemorgananschlusses (P, A), dem Nichtvorhandensein des betreffenden peripheren Systemorganes bzw. Systemorgananschlusses (P, A) entsprechen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-3 495 220 (LAWSON et al.) * Spalte 1, "Abstract"; Spalte 1, Zeilen 16-68; Spalte 3, Zeilen 12-31; Spalte 29, Zeile 21 - Spalte 31, Zeile 50; Spalte 36, Zeilen 31-36 * | 1 | H 04 Q 3/54 H 04 Q 11/04 H 04 M 3/24 |
| Y | | 2 | |
| D,Y | TELCOM REPORT, Heft 4, 1981, Beiheft "Digitalvermittlungssystem EWSD", Seiten 7-12, München, DE D. BOTSCH: "Das System EWSD" * Seite 8, rechte Spalte, Zeilen 9-18,26-31; Seite 10, mittlere Spalte, Zeile 2 - rechte Spalte, Zeile 11; Seite 11, mittlere Spalte, Zeile 14 - letzte Zeile * | 2 | |
| A | Idem. | 1 | RECHERCHIERTE SACHGEBIETE (Int. Cl. ³) H 04 Q H 04 M |
| A | DE-A-1 524 212 (SIEMENS) * Seite 4, Zeile 16 - Seite 8, Zeile 11; Seite 9, Zeilen 3-20; Seite 11, Zeile 18 - Seite 12, Zeile 2; Seite 17, Zeile 6 - Seite 18, Zeile 6; Seite 20, Zeile 1 - Seite 22, Zeile 11; Seite 24, Zeile 23 - Seite 25, Zeile 6; Patentansprüche 11,12 * | 1,2 | |

-/-

Der vorliegende Recherchenbericht wurde für alle Patentansprüche erstellt.

| Recherchenort DEN HAAG | Abschlußdatum der Recherche 25-05-1984 | Prüfer DE MUYT H.A. |
|---|---|---|

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | THE BELL SYSTEM TECHNICAL JOURNAL, Band 43, Heft 9, Teil 1, September 1964, Seiten 1961-2019, Murray Hill, US R.W. DOWNING et al.: "No. 1 ESS maintenance plan" * Seite 1970, Zeilen 5-21; Seite 1973, Zeilen 23-31; Seite 1975, Zeilen 37-40; Seite 1984, Zeilen 1-9; Seite 1985, Zeilen 27-30; Seite 1993, Zeilen 16-20; Seite 1997, Zeilen 3-5,12-14; Seite 2004,2005, Abschnitt 5.5.3; Seite 2009, Zeilen 1-11; Seite 2013, Zeile 24 - Seite 2014, Zeile 10 * | 1,2 | |
| | --- | | |
| A | DE-A-1 537 865 (S.E.L.) * Seite 3, Zeile 28 - Seite 4, Zeile 31; Seite 11, Zeile 31 - Seite 12, Zeile 1; Seite 13, Zeilen 1-22; Seite 14, Zeilen 27-32 * | 1,2 | RECHERCHIERTE SACHGEBIETE (Int. Cl. 3) |
| | --- | | |
| A | THE BELL SYSTEM TECHNICAL JOURNAL, Band 61, Nr. 4, April 1982, Seiten 597-625, Murray Hill, US F.H. KEEVE et al.: "No. 10A remote switching system: system maintenance" * Seiten 604-607, Abschnitte 3.2 und 3.3 * | 1,2 | |
| | --- -/- | | |

Der vorliegende Recherchenbericht wurde für alle Patentansprüche erstellt.

| Recherchenort | Abschlußdatum der Recherche | Prüfer |
|---|---|---|
| DEN HAAG | 25-05-1984 | DE MUYT H.A. |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | THE BELL SYSTEM TECHNICAL JOURNAL, Band 61, Nr. 4, April 1982, Seiten 491-524, Murray Hill, New Yersey, US D.W. BROWN et al.: "No. 10A remote switching system: host software" * Seiten 518-521, Absatz VII * | 1,2 | |
| A | NATIONAL TELECOMMUNICATIONS CONFERENCE, Band 1, November 29 - Dezember 3, 1981, Heft A6.4, Seiten 1-3, New Orleans, US R.E. SEVIORA et al.: "DMS-100 peripheral maintenance software" * Seiten 2 und 3, Abschnitt 2.3 * | 1,2 | |
| A | INTERNATIONAL SWITCHING SYMPOSIUM, 7-11 Mai, 1979, Heft 13c2, Seiten 178-185, Paris, FR G.J. GARWOOD: "Diagnostic de faute dans l'autocommutateur CPE type Pathfinder" * Seite 182, Abschnitt 3.3.3 * | 1,2 | RECHERCHIERTE SACHGEBIETE (Int. Cl. ³) |

Der vorliegende Recherchenbericht wurde für alle Patentansprüche erstellt.

| Recherchenort DEN HAAG | Abschlußdatum der Recherche 25-05-1984 | Prüfer DE MUYT H.A. |
|---|---|---|